# EUROPÄISCHE PATENTSCHRIFT

(11) **EP 1 618 984 B1**
(45) Veröffentlichungstag und Bekanntmachung des Hinweises auf die Patenterteilung: **06.09.2006**
(21) Anmeldenummer: 04016048.3
(22) Anmeldetag: 08.07.2004
(51) Int. Cl.: B23K 26/03

(54) **Laserschweissverfahren und -vorrichtung**
Laser welding process and device
Procédé et dispositif de soudage laser

(43) Veröffentlichungstag der Anmeldung: 25.01.2006
(73) Patentinhaber: TRUMPF Laser GmbH + Co. KG, 78713 Schramberg (DE)
(72) Erfinder: Huonker, Martin, 78658 Zimmern (DE); Schäfer, Peter, 78713 Schramberg (DE)
(74) Vertreter: Kohler Schmid Möbus

(56) Entgegenhaltungen:
- EP-A- 1 238 744
- DE-A- 19 635 843

## Beschreibung

Die vorliegende Erfindung betrifft ein Laserschweißverfahren, bei dem Schweißungen auf Schweißfehler überwacht und gegebenenfalls Reparaturschweißungen durchgeführt werden, sowie eine zum Durchführen dieses Laserschweißverfahrens geeignete Vorrichtung mit einer Laserschweißeinrichtung, einer Fehlerüberwachungseinrichtung, einer Speichereinrichtung und einer Vergleichseinrichtung.

Ein derartiges Laserschweißverfahren und eine derartige Vorrichtung sind beispielsweise durch die EP-A-1 238 744 bekannt geworden.

Beim Lasertiefschweißen wird das zu schweißende Material lokal auf Verdampfungstemperatur erhitzt, so dass sich durch den Dampfdruck eine Dampfkapillare im Werkstück bildet. Beim Erzeugen der Schweißnaht wird die Kapillare durch das Werkstück bewegt. Dabei wird durch die Tiefenausdehnung der Dampfkapillare im Material die Einschweißtiefe festgelegt. Instabilitäten in der Dampfkapillare können zur Entstehung von Fehlern, wie Poren oder Auswürfen, führen. Diese beim Laserschweißprozess auftretenden Fehler können mit einer Reihe bekannter Verfahren und Sensoren detektiert werden. Beim Überschreiten einer gewissen Fehlertoleranzschwelle wird das fehlerhafte Teil als Ausschuß gekennzeichnet. Es wird aus dem Produktionsprozess entnommen, manuell begutachtet und anschließend entweder verschrottet oder repariert. Daher werden z.B. im Autokarosseriebau Schweißnähte überbestimmt ausgelegt, damit fehlerhafte Schweißstellen nicht automatisch zu einem Aussortieren des Bauteils führen.

Zur Überwachung des Laserschweißprozesses werden üblicherweise zwei verschiedene Typen von Sensoren eingesetzt: Einerseits können mit lichtempfindlichen Detektoren Signale aus der Prozesszone, d.h. Prozessleuchten auf verschiedenen Wellenlängen, rückreflektierte Laserstrahlung und Wärmestrahlung, aufgenommen werden. Andererseits können Kamerasysteme zur Bilderkennung der Fügezone vor, in und hinter dem Laserwirkbereich eingesetzt werden. Durch Kamerabeobachtung und Lichtschnittverfahren ist eine Analyse der Nahtgeometrien möglich.
Zur Überwachung des Laserschweißprozesses mit lichtempfindlichen Sensoren wird ein Teil des vom Werkstück zum Bearbeitungskopf zurückreflektierten Lichts (Prozessleuchten, Laserlicht) oder auch der Wärmestrahlung des Schmelzbades beispielsweise über Strahlteiler ausgekoppelt und auf den lichtempfindlichen Sensor geleitet. Alternativ kann der Sensor auch außerhalb des Laserstrahls benachbart zur Bearbeitungsoptik angeordnet sein. Es werden bestimmte schmale Frequenzbereiche detektiert und analysiert. Die Intensität der reflektierten Strahlung ist ein Signal für die Einschweißtiefe. Bei Störungen der Schweißnahtausbildung fluktuiert die Intensität der reflektierten Strahlung stark und stellt damit einen Indikator für Schweißnahtfehler dar. Im Nachlauf der Schweißnaht können die dort auftretenden Infrarotemissionen ebenfalls zu Aussagen über die Schweißnahtqualität dienen.

Aus einem Kamerabild des Schmelzbads können außerdem geometrische Größen wie Länge, Breite und Schwerpunktlage des Schmelzbads und der Laserwechselwirkungszone, der Stoßlage und der Dampfkapillare ermittelt werden. Aus der Länge oder Fläche des Schmelzbades lässt sich auf die Einschweißtiefe zurückschließen, da bei größerer Eindringtiefe des Laserstrahls in das Material die Schmelzbadlänge bzw. -fläche steigt. Durch eine schräge Anbringung der Kamera am Bearbeitungskopf kann der Prozess unter einem bestimmten Winkel beobachtet werden. Ändert sich dabei die Fokuslage durch eine Variation des Abstandes zwischen Bearbeitungskopf und Werkstück, so ist dies deutlich als Verschiebung der Laserwechselwirkungszone im Kamerabild zu erkennen.

Überwachung und Bewertung der Prozesssignale erfolgen bei Serienschweißungen üblicherweise durch Vergleich mit Referenzsignalen. Dazu werden aus einigen geprüften Musterschweißungen die mittleren Referenzsignale ermittelt und in der Prozesssteuerung hinterlegt. Zusätzlich sind Bedingungen festgelegt, nach denen aus einer Abweichung der gemessenen Signale von den Referenzsignalen eine Wahrscheinlichkeit für einen Schweißfehler berechnet wird. Bei Überschreitung einer gewissen Signalgrenze wird ein Schweißfehler erkannt und registriert.
So können z.B. die folgenden Arten von Schweißfehlern detektiert werden:
- Schwankungen der Einschweißtiefe
- Poren in der Schweißnaht
- Auswürfe bis Löcher (wichtig bei verzinkten Blechen im Automobilbau)
- Anbindefehler bei einer I-Naht am Überlappstoß, zu großer Spalt
- Positionsfehler bei einem Fügestoß
- Variationen in der Schweißnahtbreite

Aus der eingangs genannten EP-A-1 238 744 ist ein Laserschweißqualitätsüberwachungsverfahren bekannt, bei dem die vom Schweißteil abgestrahlte Infrarotstrahlung erfasst und einer Qualitätsüberwachung zugeführt wird. Dort wird die Infrarotstrahlung spektral analysiert und in einem bestimmten Frequenzband mit einem vorbestimmten Schwellwert verglichen, um zu beurteilen, ob ein Schweißfehler aufgetreten ist oder nicht. Fehlerhafte Teile werden aussortiert und nach visueller Prüfung gegebenenfalls einer Reparaturschweißung unterzogen.

Aus der DE 196 35 843 A1 ist weiterhin eine Laserschweißvorrichtung bekannt, bei der die Qualität der Schweißnaht ständig mit einer hochauflösenden Kontrollkamera und einem Wirbelstromkontrollsensor überwacht wird. Wenn dabei ein Schweißfehler erkannt wird, wird mittels einer zweiten Laserschweißeinrichtung die fehlerhafte Schweißnaht nachgeschweißt. Die Schweißparameter für diese Zusatzschweißung werden über einen Impulsgeber so programmiert, bis das von der Kontrollkamera gelieferte Bild eine geometrisch einwandfreie Schweißnaht zeigt. Allerdings kann durch dieses Nachschweißen nicht jeder beim Laserschweißen auftretende Schweißfehler behoben werden, so dass das fehlerhafte Teil dann als Ausschuß aus dem Produktionsprozess entnommen werden muss.

Daher ist es die Aufgabe der vorliegenden Erfindung, bei einem Laserschweißverfahren und einer Vorrichtung der jeweils eingangs genannten Art den beim Laserschweißen anfallenden Ausschuss zu minimieren bzw. möglichst vollständig zu vermeiden.

Diese Aufgabe wird beim Verfahren erfindungsgemäß dadurch gelöst, dass vorab mögliche Schweißfehler und zugeordnete Reparaturschweißparameter, insbesondere Sätze von Reparaturschweißparametern, gespeichert werden, dass eine erkannte fehlerhafte Schweißung mit den gespeicherten Schweißfehlern verglichen wird und dass bei positivem Vergleich im Bereich der fehlerhaften Schweißung eine Reparaturschweißung mit den dem erkannten Schweißfehler zugeordneten Reparaturschweißparametern durchgeführt wird.

Erfindungsgemäß werden in Abhängigkeit der möglichen Schweißfehler unterschiedliche Sätze von Reparaturschweißparametern bzw. - strategien vorab definiert, die beispielsweise an der oder den festgestellten fehlerhaften Schweißungen ein erneutes Überschweißen, ggf. mit veränderten Leistungs-, Geschwindigkeits- und Fokuslageparametern, bewirken. Die Sätze der Reparaturschweißparameter sind in der Laser- und Robotersteuerung hinterlegt und werden automatisch umgesetzt. Beispiele solcher Reparaturschweißstrategien sind in der folgenden Tabelle zusammengefasst, wobei auch die zum Erkennen des jeweiligen Schweißfehlers geeignete Detektorart angegeben ist:

| Detektorart | Schweißfehler | Reparaturschweißstrategie |
|---|---|---|
| Prozessleuchten und Rückreflex | Unzureichende Schweißtiefe | Überschweißen mit geringerer Schweißgeschwindigkeit oder höherer Laserleistung |
| Prozessleuchten und Rückreflex | Spikebildung der Schweißtiefe | Überschweißen der fehlerhaften Naht |
| Prozessleuchten und Rückreflex | Unzureichende Wurzelausbildung | Überschweißen mit geringerer Schweißgeschwindigkeit oder höherer Laserleistung |
| Bilderkennung | Positionierfehler der Nahtlage (Stoß nicht getroffen) | Erneute Schweißung mit korrigierten Bahnkoordinaten |
| | | → Korrekte Kontur |
| Bilderkennung, Prozessleuchten und Rückreflex | Aluminium-Schweißen: Schmelzauswürfe | Da AI-Legierungen meist mit Zusatzwerkstoff geschweißt werden, kann mit diesem Zusatzwerkstoff der Auswurfkrater geschlossen werden |
| Bilderkennung | Aluminium-Schweißen: Ungenügende Endkraterfüllung | Auffüllen mit Zusatzdraht |
| Bilderkennung, Prozessleuchten und Rückreflex | Stahl-Schweißen: Schmelzauswürfe beim Überlappstoß von verzinkten Blechen (typisch beim Schweißen von Auto-Karosserien) | 2. Naht neben und parallel zum fehlerhaften Bereich |
| | | → Vergrößerung der Anbindequerschnitts |
| Ultraschall | Poren in Nahtbereich | Überschweißen mit gleicher Streckenenergie und geringerer Schweißgeschwindigkeit zum Ausgasen |
| | | → Zeit zum Entgasen |
| Bilderkennung | Große Oberflächenrauheit | Überschweißen mit defokussiertem Strahl und/oder höherer Schweißgeschwindigkeit und/oder geringerer Strahlleistung |
| | | **→** Nahtglättung |
| Bilderkennung | Einbrandkerben | Überschweißen mit defokussiertem Strahl |
| | | → breitere Oberraupe |
| Bilderkennung | Zu große Nahtüberhöhung | Überschweißen mit defokussiertem Strahl |
| | | → breitere Oberraupe |
| Bilderkennung | Schroffer Übergang Nahtüberwölbung zu Grundmaterial | Überschweißen mit defokussiertem Strahl |
| | | → breitere Oberraupe |
| Bilderkennung | Decklagenunterwölbung | Überschweißen mit Zusatzwerkstoff |
| | | → Auffüllen |

Durch diese unterschiedlichen Reparaturstrategien entfällt die Notwendigkeit einer Überbestimmung von Schweißnähten, was zu einer deutlichen Kostenerspamis führt. Die Reparaturschweißung wird in derselben Anlage und Aufspannung durchgeführt wie die Hauptschweißung und ist automatisierbar.

Vorzugsweise wird die Position jeder fehlerhaften Schweißung gespeichert und werden die Reparaturschweißungen erst nach Abschluss aller anderen Schweißungen durchgeführt. Dabei können entweder nur die Fehlerstellen angefahren werden, oder das Maschinenprogramm läuft erneut vollständig ab, wobei der Laser nur im Bereich der Fehlerstellen eingeschaltet wird.

Vorzugsweise werden die Schweißungen auf Schweißfehler mithilfe der Messung von Temperatur, Ultraschall oder Prozesslicht oder mit Bilderkennung oder mit Kombinationen davon überwacht.

Die oben genannte Aufgabe wird bei der eingangs genannten Vorrichtung erfindungsgemäß dadurch gelöst, dass in der Speichereinrichtung mögliche Schweißfehler und zugeordnete Reparaturschweißparameter, insbesondere Sätze von Reparaturschweißparametern, gespeichert sind, und dass die Vergleichseinrichtung eine von der Fehlerüberwachungseinrichtung erkannte fehlerhafte Schweißung mit den in der Speichereinrichtung gespeicherten Schweißfehlern vergleicht und bei positivem Vergleich die dem erkannten Schweißfehler zugeordneten Reparaturschweißparameter an eine Steuereinrichtung liefert, die zur Steuerung der Laserschweißeinrichtung zum Ausführen einer Reparaturschweißung ausgebildet ist.

Bevorzugt weist die Schweißvorrichtung in der Steuereinheit eine Ortsmesseinrichtung auf, welche beim Auftreten einer von der Fehlerüberwachungseinrichtung erkannten fehlerhaften Schweißung den Fehlerort registriert.

Besonders bevorzugt weist die Fehlerüberwachungseinrichtung eine lichtempfindliche Detektoreinheit und/oder ein Kamerasystem auf.

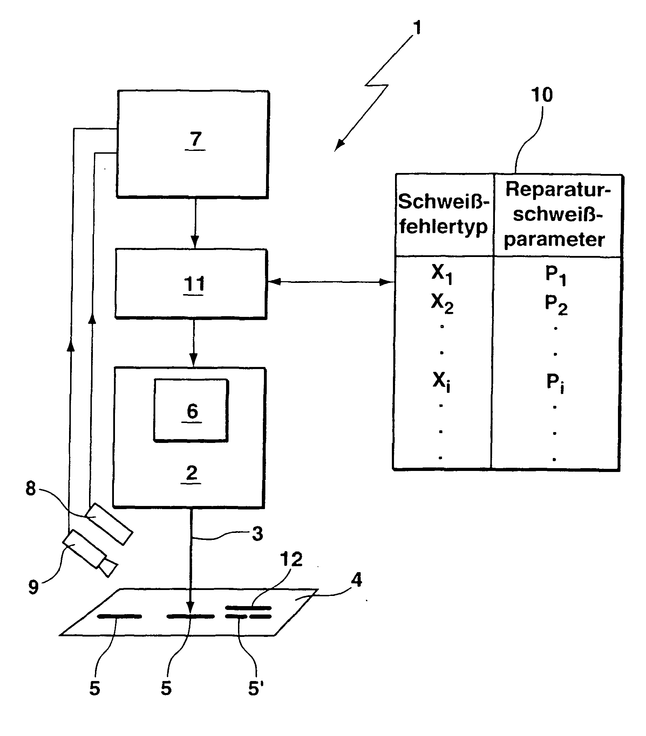

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Die in der einzigen Figur schematisch gezeigte erfindungsgemäße Vorrichtung **1** weist eine Laserschweißeinrichtung **2** auf, die mittels eines Laserstrahls **3** an einem oder mehreren Werkstücken **4** Schweißungen (Schweißnähte) **5, 5'** erzeugt. Die Bewegung des Laserstrahls 3 auf dem Werkstück 4 wird durch eine Steuereinheit **6** der Laserschweißeinrichtung 2 gesteuert. Die Vorrichtung 1 weist weiterhin eine Fehlerüberwachungseinrichtung **7,** die mit einer lichtempfindlichen Detektoreinheit **8** und/oder einem Kamerasystem (Kontrollkamera) **9** die Schweißungen 5, 5' auf Schweißfehler überwacht, eine Speichereinrichtung **10,** in der mögliche Schweißfehler **X**_{**1**}**, X**_{**2**}**,** ... mit ihren zugehörigen Sätzen von Reparaturschweißparametern **P**_{**1**}**, P**_{**2**}**,...** hinterlegt sind, sowie eine Vergleichseinrichtung **11** auf, die eine von der Fehlerüberwachungseinrichtung 7 erkannte fehlerhafte Schweißung 5 mit den in der Speichereinrichtung 10 gespeicherten Schweißfehlern X₁, X₂, ... vergleicht.

Wenn beispielsweise die Schweißung 5' fehlerhaft ist, wird dies von der Fehlerüberwachungseinrichtung 7 erkannt. Von einer Ortsmesseinrichtung in der Steuereinheit 6 wird der Fehlerort registriert. In der Vergleichseinrichtung 11 wird die Schweißung 5' mit den in der Speichereinrichtung 10 gespeicherten Schweißfehlern X₁, X₂, ... verglichen. Wenn die fehlerhafte Schweißung 5' z.B. dem gespeicherten Fehler X₁ entspricht, d.h. bei positivem Vergleich, liefert die Vergleichseinrichtung 11 den diesem erkannten Schweißfehler X₁ zugeordneten Reparaturschweißparametersatz an die Steuereinrichtung 6, die im Bereich des erkannten Schweißfehlers 5' eine Reparaturschweißung **12** entsprechend dem Satz von Reparaturschweißparametern P₁ ausführt. Wie in der Figur gezeigt, kann diese Reparaturschweißung 12 eine zweite Schweißung sein, die in einem definierten seitlichen Abstand zur ersten Schweißung 5' durchgeführt ist. Wenn bei der fehlerhhaften Schweißung 5' größere Löcher in der Schweißnaht auftreten, kann die Reparaturschweißung 12 auch mit Hilfe von Zusatzmaterial durchgeführt werden.

## Patentansprüche

1. Laserschweißverfahren, bei dem Schweißungen (5) auf Schweißfehler überwacht und gegebenenfalls Reparaturschweißungen durchgeführt werden,
**dadurch gekennzeichnet,**
**dass** vorab mögliche Schweißfehler (X₁, X₂, ...) und zugeordnete Reparaturschweißparameter (P₁, P₂, ...), insbesondere Sätze von Reparaturschweißparametern, gespeichert werden,
**dass** eine erkannte fehlerhafte Schweißung (5') mit den gespeicherten Schweißfehlern (X₁, X₂, ...) verglichen wird und
**dass** bei positivem Vergleich im Bereich der fehlerhaften Schweißung (5') eine Reparaturschweißung (12) mit den dem erkannten Schweißfehler (Xᵢ) zugeordneten Reparaturschweißparametern (Pᵢ) durchgeführt wird.

2. Verfahren nach Anspruch 1, **dadurch gekennzeichnet, dass** die Position jedes Schweißfehlers (5') gespeichert und die Reparaturschweißung (12) erst nach Abschluss aller anderen Schweißungen (5) durchgeführt wird.

3. Verfahren nach Anspruch 2, **dadurch gekennzeichnet, dass** das Schweißprogramm erneut vollständig abläuft und der Laser nur im Bereich der Fehlerstellen eingeschaltet wird.

4. Verfahren nach einem der vorhergehenden Ansprüche, **dadurch gekennzeichnet, dass** die Schweißungen (5, 5') auf Schweißfehler mithilfe der Messung von Temperatur, Prozesslicht oder Ultraschall oder mit Bilderkennung oder mit Kombinationen davon überwacht werden.

5. Vorrichtung (1) zum Durchführen des Verfahrens nach einem der vorhergehenden Ansprüche, mit einer Laserschweißeinrichtung (2), einer Fehlerüberwachungseinrichtung (7), einer Speichereinrichtung (10) und einer Vergleichseinrichtung (11),
**dadurch gekennzeichnet,**
**dass** in der Speichereinrichtung (10) mögliche Schweißfehler (X₁, X₂, ...) und zugeordnete Reparaturschweißparameter (P₁, P₂, ...), insbesondere Sätze von Reparaturschweißparametern, gespeichert sind, und dass die Vergleichseinrichtung (11) eine von der Fehlerüberwachungseinrichtung (7) erkannte fehlerhafte Schweißung (5') mit den in der Speichereinrichtung (10) gespeicherten Schweißfehlern (X₁, X₂, ...) vergleicht und bei positivem Vergleich die dem erkannten Schweißfehler (Xᵢ) zugeordneten Reparaturschweißparameter (Pᵢ) an eine Steuereinrichtung (6) liefert, die zur Steuerung der Laserschweißeinrichtung (2) zum Ausführen einer Reparaturschweißung (12) ausgebildet ist.

6. Vorrichtung nach Anspruch 5, **gekennzeichnet durch** eine Ortsmesseinrichtung in der Steuereinheit (6), welche beim Auftreten einer von der Fehlerüberwachungseinrichtung (7) erkannten fehlerhaften Schweißung (5') den Fehlerort registriert.

7. Vorrichtung nach Anspruch 5 oder 6, **dadurch gekennzeichnet, dass** die Fehlerüberwachungseinrichtung (7) eine lichtempfindliche Detektoreinheit (8) und/oder ein Kamerasystem (9) aufweist.

## Claims

1. Laser welding process, in which welds (5) are monitored for weld defects and, if applicable, repair welds are made,
**characterised in**
**that** possible weld defects (X₁, X₂,...) and associated repair weld parameters (P₁, P₂), in particular sets of repair weld parameters, are firstly stored,
**that** a recognised defective weld (5') is compared with the stored weld defects (X₁, X₂,...) and
**that**, if the comparison is positive, a repair weld (12) is made in the region of the defective weld (5') with the repair weld parameters (Pᵢ) associated with the recognised weld defect (Xᵢ).

2. Process according to Claim 1, **characterised in that** the position of each weld defect (5') is stored and the repair weld (12) is not made until all other welds (5) have been completed.

3. Process according to Claim 2, **characterised in that** the welding program is re-run completely and the laser is only switched on the region of the defect locations.

4. Process according to any one of the preceding Claims, **characterised in that** the welds (5, 5') are monitored for weld defects by means of measuring temperature, process light or ultrasound or with image recognition or with combinations thereof.

5. Device (1) for carrying out the process according to any one of the preceding Claims, with a laser welding device (2), a defect monitoring device (7), a memory device (10) and a comparator device (11),
**characterised in**
**that** possible weld defects (X₁, X₂,...) and associated repair weld parameters (P₁, P₂), in particular sets of repair weld parameters, are stored in the memory device (10), and that the comparator device (11) compares a defective weld (5') recognised by the defect monitoring device (7) with the weld defects (X₁, X₂,...) stored in the memory device (10) and, if the comparison is positive, delivers the repair weld parameters (Pᵢ) associated with the recognised weld defect (Xᵢ) to a control device (6) which is formed to control the laser welding device (2) to make a repair weld (12).

6. Device according to Claim 5, **characterised by** a location measuring device in the control unit (6) which, upon the occurrence of a defective weld (5') recognised by the defect monitoring device (7), records the defect location.

7. Device according to Claim 5 or 6, **characterised in that** the defect monitoring device (7) comprises a light-sensitive detector unit (8) and/or a camera system (9).

## Revendications

1. Procédé de soudage laser, dans lequel les soudures (5) sont contrôlées au niveau des défauts de soudure, et des soudages de réparation sont éventuellement réalisés,
**caractérisé en ce que**,
des défauts de soudure (X₁, X₂, ...) possibles et des paramètres de soudage de réparation (P₁, P₂, ...) associés, en particulier des ensembles de paramètres de soudage de réparation, sont préalablement enregistrés,
une soudure (5') défectueuse détectée est comparée aux défauts de soudure enregistrés (X₁, X₂, ...), et
en cas de comparaison positive dans la zone de la soudure défectueuse (5'), un soudage de réparation (12) avec les paramètres de soudage de réparation (Pᵢ) associés au défaut de soudage (Xᵢ) détecté est réalisé.

2. Procédé selon la revendication 1, **caractérisé en ce que** la position de chaque défaut de soudure (5') est enregistrée, et le soudage de réparation (12) est réalisé seulement à l'issue de toutes les autres soudures (5).

3. Procédé selon la revendication 2, **caractérisé en ce que** le programme de soudage se déroule de nouveau complètement et le laser n'est activé que dans la zone des emplacements défectueux.

4. Procédé selon l'une des revendications précédentes, **caractérisé en ce que** les soudures (5, 5') sont contrôlées au niveau des défauts de soudure à l'aide de la mesure de la température, de la lumière de processus ou des ultrasons ou avec l'analyse d'image ou avec des combinaisons de ceux-ci.

5. Dispositif (1) pour réaliser le procédé selon l'une des revendications précédentes, avec un dispositif de soudage laser (2) et un dispositif de contrôle des défauts (7), un dispositif de stockage (10) et un dispositif de comparaison (11),
**caractérisé en ce que**,
des éventuels défauts de soudure (X₁, X₂, ...) et des paramètres de soudage de réparation (P₁, P₂, ...) associés, en particulier des ensembles de paramètres de soudage de réparation, sont enregistrés dans le dispositif de stockage (10), et le dispositif de comparaison (11) compare une soudure défectueuse (5') décelée par le dispositif de contrôle des défauts (7) aux défauts de soudure (X₁, X₂, ...) enregistrés dans le dispositif de stockage (10), et en cas de comparaison positive transmet les paramètres de soudage de réparation (Pᵢ) associés au défaut de soudure (Xᵢ) détecté à un dispositif de commande (6) qui est configuré pour commander le dispositif de soudage laser (2) en vue de la réalisation d'un soudage de réparation (12).

6. Dispositif selon la revendication 5, **caractérisé par** un dispositif de mesure locale dans l'unité de commande (6) qui enregistre l'emplacement défectueux en cas d'apparition d'une soudure (5') défectueuse détectée par le dispositif de contrôle des défauts (7).

7. Dispositif selon la revendication 5 ou 6, **caractérisé en ce que** le dispositif de contrôle des défauts (7) comprend une unité de détecteur (8) photosensible et/ou un système de caméra (9).
